# EUROPEAN PATENT APPLICATION

(11) **EP 4 617 029 A1**
(43) Date of publication of application: **17.09.2025**
(21) Application number: 24163104.3
(22) Date of filing: 13.03.2024
(51) Int. Cl.: B29B 17/02, B03B 9/06, G06N 20/00, B29B 17/04, B29K 75/00, B29K 105/04, B29L 31/30

(54) **APPARATUS FOR GENERATING CONTROL DATA FOR CONTROLLING AN AUTOMOTIVE SHREDDER RESIDUE RECYCLING PROCESS**

(71) Applicant: BASF SE, 67056 Ludwigshafen am Rhein (DE)
(72) Inventor: SCHORK, Nicolas Stefan, 67056 Ludwigshafen am Rhein (DE); STAMMER, Achim, 67251 Freinsheim (DE); TEXEIRA FREIRE, Rafael, 67056 Ludwigshafen am Rhein (DE); WEISS, Patrick, 49448 Lemfoerde (DE); AGGARWAL, Vikas, 67056 Ludwigshafen am Rhein (DE)
(74) Representative: BASF IP Association

(57) **Abstract**

Apparatus for generating control data for controlling an automotive shredder residue (ASR) recycling process. A providing unit provides measurement data indicative of a spectrum received from plastic fragments when subjected to spectroscopy. A classification model providing unit provides a plastic classification model for classifying the plastic fragments into a plastic class, wherein the plastic classes depend on plastic fragment types and/or further additives. The classification model is a machine learning based model trained utilizing historical data to classify plastic fragments based on the measurement data. A classification unit classifies the plastic fragments based on the classification model and the measurement data. A control data generation unit generates control data for controlling a recycling process based on the classification of the plastic fragments.

## Description

### Technical field

The invention refers to an apparatus, a method and a computer program product for generating control data for controlling at least a part of an automotive shredder residue (ASR) recycling process for recycling plastic fragments contained in an ASR plastic mix. Further, the invention refers to a system for generating control data for controlling at least a part of an ASR recycling process comprising the apparatus. Moreover, the invention refers to an apparatus, a method and a computer program product for training a machine learning classification model and/or SAN model utilized in the apparatus.

### Background of the invention

Disposal of solid waste material creates an enormous problem nowadays and in the future. As ongoing landfill is not a sustainable solution, alternatives such as solid waste material sorting and recycling systems are under development.

In the field of plastic foam recycling, one option is a mechanical recycling. In a mechanical recycling process, the foam flakes are typically mixed with a binding agent and the mixture is steamed and pressed, for instance in a cylindrical press, a process with is antibacterial and actives the binding agent. After the pressed cylinder has dried, it can be peeled to a desired thickness. The rolls are ultimately cut to size into a recycled foam product, for instance as fall absorbing plates or sound or heat isolating material.

Currently, innovative alternatives to mechanical recycling processes are being developed and deployed that are categorized as chemical recycling. These processes aim at depolymerizing the plastic foam to obtain components from which the polymer has been produced. As an example, a polystyrene foam (PS foam) may be depolymerized to obtain the monomer styrene. As a further example, a polyurethane foam (PU foam) may be depolymerized to obtain polyols and aromatic amines (e.g. TDA or MDA) for the production of the respective aromatic diisocyanates (e.g. TDI or MDI).

Polyurethane (PU) is one of the most important materials of the wide-ranging and diverse family of polymers and plastics. It can be solid or have an open cellular structure. In this case it is referred to as foam. Foams, in turn, can be flexible or rigid. Polyurethane is typically manufactured by reacting polyols and diisocyanates, both products derived from crude oil. A series of additives are then added to produce high-quality PU foam products. The nature of the additives depends on the application the foam will be used for, which include, among others, bedding, furniture, and automotive.

Products containing polyurethane materials are widely used in industry and in everyday applications. Because of the tremendous and still increasing prevalence of polyurethane materials, there is a large amount of waste of polyurethane materials, e.g., from old mattresses, seating furniture, insulation boards, construction material or interior parts of vehicles like car seats. This waste of polyurethane materials should be used appropriately and as ecologically friendly as possible. One way of such use of polyurethane materials is the recovery of raw materials from the polyurethane materials.

Apart from household waste, the disposal of scrap or junk vehicles is of particular concern since millions of passenger cars, trucks and busses continuously become old or non-usable. In order to recycle many of the components in such vehicles, shredders have been designed which mechanically tear the vehicles apart and separate them into two products, i.e. metallic scrap and automotive shredder residue (also named "automobile shredder residue" and abbreviated as "ASR"). The metallic scrap is shipped to metal reprocessing centers, and the ASR material is shipped to a dump or landfill. However, due to the fact that automobiles are being designed to reduce the amount of metal components and increase the number of non-metal components, it has become desirable to develop systems for sorting and recycling as many of the reusable components as possible from the ASR material.

The recycling of automotive shredder residue presents several challenges that hinder its efficient and effective recycling. ASR is usually a complex mixture of materials, including metals, plastics, rubber, glass, and various organic and inorganic compounds. The diverse composition makes it difficult to separate and recover individual components, leading to suboptimal recycling rates. Without proper separation, valuable re-sources remain trapped within the ASR, limiting their recycling. Addressing these problems is crucial to enhance the recycling of ASR and maximize its potential as a valuable resource. Developing effective methods and systems that can efficiently separate and recover the diverse components of ASR, while safely managing and disposing of hazardous substances, will play a vital role in promoting a sustainable and circular economy.

Several ASR sorting and recycling systems have been developed. For example, document EP 0692356 A2 suggests recycling automotive shredder residue by preparing a composite material comprising ASR and a virgin polymer.

Vijayan, S.K.; Kibria, M.A.; Uddin, M.H.; Bhattacharya, S. "Pretreatment of Automotive Shredder Residues, Their Chemical Characterisation, and Pyrolysis Kinetics." Sustain-ability 2021, 13, 10549 suggests recycling automotive shredder residue by pyrolysis.

Ezzat EI Halabi, Mike Third, and Matthew Doolan "Machine-based dismantling of end of life vehicles: A life cycle perspective" Procedia, 29 (2015) 651-655 suggest to recycle automotive shredder residue by machine based dismantling.

Juliana Argente Caetano, Valdir Schalch, Javier Mazariegos Pablos "Characterization and recycling of the fine fraction of automotive shredder residue (ASR) for concrete paving blocks production" Clean Technologies and Environmental Policy (2020) 22:835-847 suggest recycling ASR by solidification with cement, gravel and sand for paving blocks production.

Won-Seok Yang et al. "Utilization of automobile shredder residue (ASR) as a reducing agent for the recovery of black copper" Korean J. Chem. Eng., 33(4), 1267-1277 (2016) suggests recycling ASR by using it instead of lump coal as a reducing agent in the copper production.

There remains a need, however, for an improved system wherein the waste material can be processed into usable products. Compared to treatment processes for other (non-foam) recycling materials, for foams special problems arise due to the low density of the material and the large dimensions of the material, making an efficient handling mandatory to be economically successful.

As an example, end-of-life polyurethane foams included in polyurethane foam products in most cases consist of a mixture of different polyurethane foam types and further can comprise a plurality of additional additive materials. Producing a high-quality recycled product from these waste polyurethane foam products in a chemical recycling process is therefore a challenging task. In particular, the different foam types and additives, i.e. different classes of foam, in a recycling foam batch can have a strong influence on the recycling process and thus also on the resulting quality of the recycled product.

Moreover, the content of styrene-acrylonitrile (SAN) particles in the polyurethane foam products can also have a major influence on the chemical recycling process and thus also on the quality of the final recycled product. For example, in the presence of SAN particles, a commonly utilized polyurethane foam recycling process is not energetically optimized for the complete conversion of the polyurethane foams. In particular, for different SAN particle content it would be more useful for the chemical recycling process to utilize respective different water content or different residence times in a respective reactor. Moreover, also process steps after the conversion step can be affect-ed by a high SAN content. A high SAN content can then even lead to damaging or fouling respective operation units like heat exchangers or distillation columns. Thus, it could be advantageous for the quality of the final recycled product to know the SAN content in a polyurethane foam product in advance.

However, currently, no automatic methods exist that allow to classify a polyurethane foam product and/or to determine an SAN content accurately enough before the chemical recycling process and it is common to sort the polyurethane products to be recycled by hand training the respective personnel accordingly, for instance, to distinguish be-tween different products of different vendors for which respective classifications and/or SAN contents are known or to even estimate class and/or the SAN content by the texture, feel and look of the polyurethane foam product itself. Clearly, this kind of sorting based on subjective evaluations of the polyurethane foam products of respectively trained personnel is an error-prone, time-consuming, and costly process that still in many cases does not allow to get a final recycled product with a desired high quality. Accordingly, it would be very helpful if an at least semiautomatic process could be provided that allows to determine a class and/or an SAN content in a polyurethane foam product in a fast, easy to handle, and objective manner that at the same time allows for a sufficient accuracy in the determination of the class and/or SAN content for ensuring that a final recycling product can be produced based on the polyurethane foam products with the desired quality.

### Brief description

In this context the inventors have found that it is advantageous to utilize measurement data indicative of a spectrum from plastic fragments contained in an ASR plastic mix as input to a respectively trained machine learning based model that is trained to utilize the measurement data to predict the respective class and/or SAN content of a plastic fragment. Preferred spectroscopy methods are Raman spectroscopy, mid-infrared (MIR) spectroscopy, laser-induced fluorescence (LIF) spectroscopy and Terahertz spectroscopy, enabling receiving measurement data indicative of a respective Raman spectrum, a respective MIR spectrum, a respective LlF spectrum and/or a respective Terahertz spectrum. Since the invention utilizes measurement data indicative of a spectrum from a plastic fragment, wherein the plastic fragment is subjected to spectroscopy, the measurement data can be acquired very easily, for instance, with a handheld or installed light providing measurement device. Moreover, utilizing this easy measurement in a machine learning based model that is trained to utilize the measurement data to predict the respective class and/or SAN content of a plastic fragment, allows to determine the class and/or SAN content in a fast and suitable accurate manner. Thus, controlling at least a part of the ASR recycling process based on the such determined class and/or SAN content that has been determined objectively, fast, easily and in a suitable accurate manner, allows for a production of a final recycled product with a desired quality.

In a first aspect, an apparatus is presented for generating control data for controlling at least a part of an automotive shredder residue (ASR) recycling process for recycling plastic fragments contained in an ASR plastic mix, wherein the plastic fragments are provided to a recycling process, wherein the provided plastic fragments optionally comprise a polyurethane foam product, a polyurethane foam product with styrene-acrylonitrile (SAN) particles, a polyurethane foam product comprising different polyurethane foam types, a polyolefin product, an acrylonitrile-butadiene-styrene product, a polyamide product, a polyoxymethylene product, a polyethylene terephthalate product, a polybutylene terephthalate product, a halogen-containing polymer product, or a product comprising any mixture thereof, wherein the apparatus comprises a) a measurement data providing unit for providing measurement data associated with at least a part of the plastic fragments, wherein the measurement data is indicative of a spectrum received from the part of the plastic fragments when subjected to spectroscopy, b) a classification model providing unit for providing a plastic classification model for classifying the at least a part of the plastic fragments into a class of one or more plastic classes, wherein the plastic classes depend on the plastic fragment types and/or further additives in the plastic fragments, and wherein the classification model is a machine learning based model trained utilizing historical data to classify plastic fragments into a class of the one or more classes based on the measurement data, c) a classification unit for classifying the at least a part of the plastic fragments based on the classification model and the measurement data, d) a control data generation unit for generating control data for controlling at least a part of the ASR recycling process based on the classification of the part of the plastic fragments.

In preferred embodiments, the spectrum is a Raman spectrum, a mid-infrared (MIR) spectrum, a laser-induced fluorescence (LIF) spectrum and/or a Terahertz spectrum, and the spectroscopy is the corresponding Raman spectroscopy, MIR spectroscopy, LlF spectroscopy and/or Terahertz spectroscopy.

Generally, the apparatus can be realized in form of any hardware and/or software, in particular, as any general or dedicated computer. For example, the apparatus can be realized as a computer comprising one or more processors performing the functions defined by the units of the apparatus. However, the apparatus can also be realized in form of a distributed computing network in which one or more communicatively coupled computers comprising one or more processors are utilized for performing the functions as defined by the units of the apparatus. In particular, the units of the apparatus refer to functional units that can be realized in form of one or more processors of one or more communicatively coupled computers.

The ASR recycling process can refer to any chemical recycling process that allows for recycling of plastic fragments contained in an ASR plastic mix. The ASR plastic mix may comprise plastic fragments based on different polymeric materials, for example a polyurethane foam product, a polyurethane foam product with styrene-acrylonitrile (SAN) particles, a polyurethane foam product comprising different polyurethane foam types, a polyolefin product (such as polypropylene and polyethylene), an acrylonitrile-butadiene-styrene product, a polyamide product (such as nylon 6 or nylon 6.6), a polyoxymethylene product, a polyethylene terephthalate product, a polybutylene terephthalate product, a halogen-containing polymer product (such as polyvinyl chloride), or a product comprising any mixture thereof.

In case of plastic fragments based on polyurethanes, in particular polyurethane foams, a polyurethane foam recycling process can refer to any chemical recycling process that allows for recycling of polyurethane foam. In particular, the polyurethane foam recycling process can comprise a plurality of steps that lead to a production of a respective final recycled product from the provided polyurethane foam products. In particular, the polyurethane recycling process can comprise a pre-processing step, a chemical recycling step and a post-production step. The pre-processing step can, for instance, refer to or comprise the providing of the polyurethane foam products, a sorting of the polyurethane foam products, a pre-processing of the polyurethane foam products, for instance, a chopping or grinding of the polyurethane foam products, etc. The chemical reaction step can comprise any chemical lysis reaction that allows for a recycling of the polyurethane foam product, for instance, the chemical lysis reaction utilized by the recycling process can be an alcoholysis, in particular a glycolysis, a hydrolysis, an ammonolysis or an aminolysis or combination thereof. The post-processing step can further comprise the steps that are performed after the chemical processing step, for instance, a cooling of a lysis result, a filtration of the lysis result, a portioning of a final recycled product, a washing of a lysis result, etc.

Generally, the control data can be configured for controlling any part of the ASR recycling process, for instance, any of the steps to be performed in a comminution unit, a storing unit, a transportation unit and/or a chemical reaction unit.

The term "automotive shredder residue" (also called "ASR") as used herein is a broad term and is to be given its ordinary and customary meaning to a person of ordinary skill in the art and is not to be limited to a special or customized meaning. The automotive shredder residue may be obtainable, preferably is obtained, by shred-ding vehicles. Preferably, the automotive shredder residue is obtainable by depollution of the vehicles, dismantling the vehicles, shredding the vehicles, and separating metal particles from the shredded vehicles. The vehicles are typically end-of-life vehicles (also called "ELV"), which are typically at least 15 years old. The vehicles can be passenger cars, light-duty or heavy-duty trucks, motorbikes, a utility vehicle, an agricultural vehicle, or recreational vehicles. The vehicle can be an electric vehicle, such as a fully electric vehicle or a hybrid electric vehicle.

In depollution of vehicles hazardous liquids such as fuel, lubricating oil, coolants, brake fluids and batteries can be removed from the vehicles prior to shredding. The dismantling of vehicles may comprise selective removal of parts, such as engines, gearboxes, tires, glass, and plastics, for being reused as spare parts for the second-hand market. The dismantling may also comprise the removal of larger plastic components, such as bumpers, dashboard, fluid containers for recycling the plastics separately. The ASR may comprise further waste from other sources. For examples, garbage from the last owners may remain in the trunk or interior of the vehicles. The advantage of the present process is that it can handle broadly varying compositions of the ASR.

The shredding can be made with a vehicle shredder machine. Vehicle shredder machines are manufactured in different sizes. Typically, a vehicle shredder machine comprises a heavy fast-turning rotor, which may revolve in a vertical or a horizontal plane and is often equipped with swinging hammers. The vehicle shredder machine tears and shreds the car hulk until its parts are reduced to fragments with a desired fragment size, such as up to 30 cm, preferably 1 mm to 15 cm. Then the fragments may pass through grids and leave the rotor housing. After shredding, the metal fragments such as ferrous and non-ferrous metal fragments can be separated from the shredded vehicles. The ferrous metal fragments can be removed by magnetic separators. The non-ferrous metal fragments can be separated from the shredded vehicles by eddy current separators, by heavy media sink/float units which separate on the basis of density, or by manual sorting. Typically, 60 - 90 wt% of the vehicle weight is metal, which can be separated from the shredded vehicle.

The automotive shredder residue may represent about 10 - 40 wt%, preferably from 15 - 35, and in particular from 20 - 30 wt% of the original vehicle weight. The automotive shredder residue may comprise fragments of various polymeric vehicle parts, such as fragments of bumpers, interior panels, dashboard, cable insulation, fuel tank, electrical insulation, flexible foam seating, foam insulation panels, automotive suspension bushings, electrical potting compounds, car body parts, pillar coverings, spoilers polymer parts coated with automotive paint, wheel covers, gears, bushes, cams, bearings, weatherproof coatings, interior and exterior trims, fuel systems, gear housings, headlamp retainer, engine cover, connector housings, door handles, carburetor components, exterior mirror components, windscreen wiper components, windscreen wiper protective housings, decorative grilles, cover strips, roof rails, window frames, sliding roof frames, antenna cladding covers, front and rear lights, radiator grill and body exterior parts, engine covers, cylinder head covers, intake pipes, cylinder head covers, engine covers, housings for charge air coolers, charge air cooler valves.

The automotive shredder residue may comprise fragments of various polymeric vehicle parts, such as fragments of
- bumpers, interior panels, dashboard, cable insulation, where these fragments are often made of polypropylene;
- fuel tank, electrical insulation, where these fragments are often made of polyethylene;
- flexible foam seating, foam insulation panels, automotive suspension bushings, electrical potting compounds, hard plastic parts, transmission mounts, motor mounts, seals, impact foam parts, where these fragments are often made of polyurethane;
- body parts, dashboards, wheel covers, where these fragments are often made of acrylonitrile-butadiene-styrene;
- gears, bushes, cams, bearings, charge air coolers, cylinder head covers, oil pans, engine cooling systems, thermostat and heater housings, exhaust systems including mufflers and housings for catalytic converters, air intake manifolds, timing chain belt front covers, where these fragments are often made of nylon 6 or nylon 6.6.;
- interior and exterior trims, fuel systems, small gears, where these fragments are often made of polyoxymethylene;
- wiper arm and gear housings, headlamp retainer, connector housings, where these fragments are often made of polyethylene terephthalate; and
- door handles, bumpers, carburetor components, where these fragments are often made of polybutylene terephthalate.

The automotive shredder residue may comprise at least 30 wt%, preferably at least 40 wt%, and in particular at least 50 wt% of the fragments of the polymeric vehicle parts. The automotive shredder residue may comprise at least 20 wt%, preferably at least 30 wt%, and in particular at least 40 wt% of the fragments of the polymeric vehicle parts, which are black polymeric vehicle parts. The black polymeric vehicle parts usually comprise carbon black pigments. The automotive shredder residue may comprise up to 15 wt%, preferably up to 10 wt%, and in particular up to 5 wt% of metal fragments, such as ferrous and non-ferrous metal particles. The automotive shredder residue may comprise up to 15 wt%, preferably up to 10 wt%, and in particular up to 5 wt% of wood and cardboard. The automotive shredder residue may comprise up to 15 wt%, preferably up to 10 wt%, and in particular up to 5 wt% of glass fragments, e.g. broken window glass fragments.

The automotive shredder residue can be separated into a shredder light fraction (also called "SLF") and a shredder heavy fraction (also called "SHF"). The separation of the SLF and the SHF can be achieved by air classification. Another air classification can be made by the rotary movement of the vehicle shredder machine may create a fanning action that can blow out the shredder light fraction, and the shredder heavy fraction may leave the vehicle shredder machine through a grid. The SLF can be present in an amount of 55 - 90 wt%, preferably 65 - 85 wt%, and in particular at 70 - 80 wt% of the automotive shredder residue. The SHF may represent the remaining amount to 100 wt%. The SHF can be present in an amount of 10 - 45 wt%, preferably 15 - 35 wt%, and in particular at 20 - 30 wt% of the automotive shredder residue. The SLF may represent the remaining amount to 100 wt%. The SLF usually contains a lower weight percentage of rubber particles than the SHF. The SLF usually contains a lower weight percentage of glass particles than the SHF. The SLF usually contains a lower weight percentage of metal particles than the SHF. The SLF usually contains a higher weight percentage of polyurethane foam particles than the SHF. The SLF usually contains a lower weight percentage of solid and sand than the SHF.

In one embodiment, the plastic fragments are polyurethane products, in particular polyurethane foam products. The polyurethane foam product can be any product comprising or consisting of polyurethane foam. The polyurethane foam products can comprise different polyurethane foam types. Generally, a polyurethane foam type is defined by the utilized isocyanate and the molar mass distribution of the utilized polyol. Optionally, a polyurethane foam type can also be defined by utilized additives, stabilizers, etc. More-over, also different polyols can be utilized for different polyurethane foam types. However, the polyurethane foam product can also comprise or consist of only one polyurethane foam type. Further, the polyurethane foam product can comprise SAN particles.

The measurement data providing unit is then configured for providing measurement data associated with at least a part of the plastic fragments. In particular, the measurement data providing unit can be a receiving unit, for instance, an interface configured for receiving data that is configured for receiving the measurement data from a storage unit on which the measurement data is already stored and for then providing the measurement data. However, the measurement data providing unit can also be realized in form of a storage unit or can be configured to have access to a respective storage unit on which the measurement data is already stored. Moreover, the measurement data providing unit can also be realized as a respective measurement unit, for instance, as an infrared sensor, configured for acquiring the measurement data and then providing the same.

Generally, the measurement data is associated with at least a part of the plastic fragments, in particular, comprises or is indicative of measurements resulting from the respective part of the plastic fragments. In particular, the measurement data is indicative of a spectrum selected from a Raman spectrum, a MIR spectrum, a LlF spectrum and/or a Terahertz spectrum received from the part of the plastic fragments when the part of the plastic fragments is subjected to spectroscopy selected from Raman spectroscopy, MIR spectroscopy, LlF spectroscopy and/or Terahertz spectroscopy.

Raman spectroscopy is a spectroscopic technique typically used to determine vibrational modes of molecules, although rotational and other low-frequency modes of systems can also be observed. Raman spectroscopy is commonly used in chemistry to provide a Raman spectrum from which a structural fingerprint can be derived by which molecules can be identified. Typically, a sample is illuminated with a laser beam. Electromagnetic radiation from the illuminated spot is collected with a lens and sent through a monochromator. Elastic scattered radiation at the wavelength corresponding to the laser line (Rayleigh scattering) is filtered out by either a notch filter, edge pass filter, or a band pass filter, while the rest of the collected light is dispersed onto a detector and forms the Raman spectrum. However, also other arrangements can be utilized to sample and measure light from a probe subjected to monochromatic light as Raman spectrum.

Generally, for measuring the Raman spectrum, i.e. performing the Raman spectroscopy, the part of the plastic fragments can be subjected to monochromatic light by utilizing a respective monochromatic light source providing light with a predetermined wave-length. In particular, it is preferred to utilize a laser as light source. However also other monochromatic light sources can be utilized. Generally, the utilized monochromatic light can be in the visible range and/or the infrared range. It has been found by the inventors that in particular the infrared range, preferably, near infrared range, is suitable for a Raman spectroscopy for classifying the plastic fragments. Preferably, the wavelength of the monochromatic light source, in particular, a laser, utilizes a wavelength between 800 nm to 900 nm, more preferably, a wavelength of 852 nm. However, also other wavelengths lead to similar results, if fluorescent wavelengths, i.e. wavelength in which the plastic fragments show a fluorescent effect, are avoided.

Generally, the measurement data is indicative of the Raman spectrum, in particular, can directly comprise the result of the measurement of the Raman spectrum. However, the result of the measurement of the Raman spectrum can also first be processed, for instance, filtered to reduce noise, before being provided as measurement data, for instance, by the measurement data providing unit. For subjecting the plastic fragments with monochromatic light, in particular, laser light, and for measuring the resulting Raman spectrum, generally, the same device can be utilized that comprises a light source and also the respective arrangement, including the light sensor, for measuring the Raman spectrum. However, also different devices can be provided. The respective light source and/or light sensor can be a handheld device or a device integrated, for instance, into an automated pre-processing unit in which the plastic fragments are pre-processed, without human intervention. For example, the light source and/or sensor can be provided such that plastic fragments moving on a conveyor belt are subjected to Raman spectroscopy.

Mid-infrared (MIR) spectroscopy may be performed with an optical system comprising a detector (e.g. the hyperspectral camera) configured to capture mid-infrared images. The MIR spectrum is also known as mid-infrared image. The optical system can use the mid-infrared light to detect plastic fragments. The optical sorter may comprise the optical system which includes a light source (e.g. a LED light or a thermal emitter) to illuminate objects and a sensor (e.g. in the detector) which uses mid-infrared light to capture images of the objects, which may be presented to the optical system by a feed system. The lights and the sensors may be housed above and/or below the objects being inspected. The optical sorters may have a combination of lights and sensors to illuminate and capture images of the objects, and the images can be processed with an image processing software. The detector (e.g. the hyperspectral camera) configured to capture the mid-infrared images of the plastic fragment mix may be included in the optical system. A suitable detector configured to capture the mid-infrared images of the plastic fragment mix can be a hyperspectral camera or an array of sensors. Hyperspectral cameras are commercially available, as well as an array of sensors. Preferably, the detector configured to capture the mid-infrared images of the plastic fragment mix is a hyperspectral camera. The detector (e.g. the hyperspectral camera) may capture the mid-infrared images at an image speed of at least 50 1/s, preferably at least 200 1/s, and in particular at least 350 1/s. The mid-infrared images may comprise an electromagnetic wavelength from 2500 to 25000 nm, preferably from 2600 to 12000 nm, and in particular from 2700 to 6000 nm. The detector (e.g. the hyperspectral camera) may have a spectral resolution of less than 60 nm, preferably less than 40 nm, as defined as the wavelength of the light being measured divided by the full width half maximum (FWHM) of the spectral peak being investigated. The detector (e.g. the hyperspectral camera) may have an indium antimonide sensor. The detector (e.g. the hyperspectral camera) can be arranged proximate to the light source, which is preferably a mid-infrared light source.

Laser-induced fluorescence (LIF) spectroscopy may be performed by an optical system based on laser-induced fluorescence. The optical system may include a laser (preferably a monochromatic laser), and optionally a further light source (e.g. a LED light or a thermal emitter) to illuminate objects, and the sensor configured to capture a fluorescence signal emitted by the target plastic fragments, which may be presented to the optical system by a feed system. Preferably, the wavelength of the laser is in the range between 200 nm and 600 nm, more preferably in the range between 250 nm and 550 nm, for example between 250 nm and 300 nm, between 375 nm and 450 nm, between 520 nm and 540 nm, between 260 nm and 270 nm, between 400 nm and 410 nm, or between 530 nm and 535 nm. In an embodiment where plastic fragments based on polyamide are to be detected, the wavelength of the laser is preferably in the range between 350 nm and 550 nm, more preferably between 400 nm and 500 nm, and in particular between 420 nm and 470 nm. In an embodiment where plastic fragments based on a polyolefin are to be detected, the wavelength of the laser is preferably in the range between 250 nm and 480 nm, more preferably between 280 nm and 420 nm, and in particular between 300 nm and 380 nm. The lights and the sensors may be housed above and/or below the objects being inspected. The optical system may have a combination of lights and sensors to illuminate and capture images of the objects, and the images can be processed with an image processing software. The optical system may use laser-induced fluorescence, preferably laser-induced intrinsic fluorescence of the plastic fragments, in particular their fluorescence fingerprint spectra or their fluorescence decay lifetime constant. The sensor configured to capture the fluorescence signal emitted by the plastic fragment may be included in the optical system. Suitable sensors are commercially available, such as are optical cameras, like hyperspectral cameras, a time delay integration camera, or an image intensifier. The sensor may be sensitive in a wavelength range of 350-1000 nm. The sensitivity of the sensor can be narrowed further to the relevant wavelength range through filters. The optical cameras are preferred for analyzing the fluorescence fingerprint spectra. The sensor can be arranged proximate to the laser and the further light source.

Terahertz spectroscopy may be performed by a spectroscopic system configured to capture terahertz signals. The Terahertz spectroscopic system preferably captures terahertz signals in the electromagnetic wavelength from 0.01 THz to 10 THz, preferably from 0.05 THz to 8 THz, and in particular from 0.1 THz to 4 THz. The spectroscopic system may comprise a control unit, an emitter which may generate terahertz signals, and a detector which may receive terahertz signals. Various spectroscopic systems configured to capture terahertz signals are commercially available. The emitter and the detector may be connected to the control unit by cables or optical fibers. The emitter and the detector may be housed above and/or below the objects being inspected. The emitter and the detector may comprise means (e.g. mirrors, lenses, apertures) for manipulating the emitted and received terahertz signal to allow a focus on the position of the objects to be detected. The spectroscopic system can consist of multiple combinations of emitters and detectors to allow multipoint detection (e.g. in a line to realize a line-sensor). The emitter and the detector may also be mounted on a motorized stage that allows a scan of the whole width of a conveyor belt for example. If the feed system for feeding the objects to be analyzed to the spectroscopic system is designed to ensure a linear placement of the feed, then the emitter and detector can be fixed in position to enable sequential scanning of the feed. The detected time domain signals can be recorded and postprocessed. A frequency spectrum can be calculated from the time signal via Fourier transformation. By combining single signals 1D and/or 2D images can be generated. The hyperspectral images can be processed using image analysis software. The repetition frequency of a single terahertz signal depends on the technology used. A time signal acquisition rate (also called scan speed) of at least 40 Hz are desirable, preferably more than 100 Hz, and in particular more than 1000 Hz. The spot size of the spectroscopic system can be smaller than 10 mm in diameter, preferably 5 mm and in particular 1 mm. The spectroscopic system can be used in transmission mode, in reflection mode, or in combination of both modes. The emitter and the detector can be arranged on the same side or on opposite sides of the plastic fragment mix depending on the mode of operation, such as transmission mode, reflection mode, or combination of both modes. The emitter and detector could be aligned in a fixed orientation towards each other, preferably to maximize the detected signal. If reflection and transmission should be combined, then two detectors and one or two emitters could be employed.

Generally, the classification model providing unit can be a receiving unit for receiving the classification model, for instance, from a storage or from an input unit, but can also be a storage unit itself or comprise access to a respective storage unit on which the classification model is already stored for providing the same. The classification model is a machine learning based model that has been trained such that it is configured to classify plastic fragments, in particular, at least the part of the plastic fragments for which the measurement data is provided, into a class of the one or more classes based on the measurement data. In particular, the classification model is a machine learning based model that has been parameterized, i.e. trained, based on historical training data, to determine the class of plastic based on the measurement data. Generally, the classification model can be based on any known machine learning algorithm, like a neural network, a regression model, or a classification algorithm, etc. However, it has been found by the inventors that, in particular, a classification model comprising a Partial Least Square-Discriminant analysis algorithm or a vector support machine provides accurate results while the training and also the application efforts, in particular, with respect to computational resources, is in an acceptable range to still allow for a fast determination of the class of plastic, in particular, for a real-time determination that allows for a real-time controlling of the ASR recycling process, for instance, for a real-time sorting of respective parts of plastic fragments. However, also other machine learning based models like neural networks can be trained for this task. The provided classification model has generally been trained before being provided by the classification model providing unit by utilizing historical training data comprising historical measurement data of different plastic fragments and respective classes of the plurality of different plastic fragments. Respective measurement data can then be acquired in the same way as will be the case during the application of the model, for instance, by also using a handheld device or a respective process-integrated device and a respective trainable model can then be trained by parameterizing the respective parameters of the model utilizing known training methods. For example, supervised but also unsupervised training methods can be utilized, respectively.

Generally, the plastic fragment classes, i.e. the plastic classes, depend on the plastic fragment types and/or further additives present in the plastic fragments. The classes can be predefined and the plastic classification model can be trained to classify a plastic fragment into respective predefined plastic classes. Predefined plastic classes can, for example, be based on possible differences between the classes with respect to the optimal recycling process parameters. However, the classes can also be identified during the training itself, and thus refer to classes that have not been predefined. For example, a principal component analyses (PCA) can be applied to measurement data of different plastic fragments, for instance, on the historical training data, and the classes can then automatically or semi-automatically determined based on the clusters identified by the PCA. However, also other classification methods that allow to identify classes based on the measurement data can be utilized. Depending on the definition of the classes, the plastic classification model can be configured to classify a plastic fragment only in one class, respectively, or in a plurality of classes. For example, in the case of a polyurethane foam product as plastic fragment, if two of the classes refer to "a polyurethane foam product with flame protection" and another class refers to "standard polyurethane foam product", the polyurethane foam product can be classified into both classes if it refers to a standard polyurethane foam product with flame protection. However, if, for instance, the classes for classifying the polyurethane foam products refer to only two classes like "standard" and "not standard", a polyurethane foam product can only be classified into one of these classes. Generally, the classes can depend on the plastic fragment types utilized in the plastic fragments and thus on the mixture of plastic fragment types present in the plastic fragments. Additionally or alternatively, the plastic classes can depend on any further additives provided in the plastic fragments, for instance, on functional additives that are utilized to adapt one or more functions of the plastic fragments. An example for such additives are additives that are utilized to pro-vide a flame protection. Further possible additives that can be utilized for classifications are water, silicone-stabilizers, like siloxanes with polyetherol-sidechains, crosslinker, like glycerin, diethanolamine, sorbitol, chain-extenders, like butanediol, methyl-propanediol, monools, like phenoxyethanol, antioxidants, flame retardants, inorganic fillers like chalk, defoamers, catalysts, colorants. Moreover, also other aspects of the plastic fragments can be taken into account as classes, for example, dirt, dust, humidity, microbial or fungal contaminations. For example, a respective threshold can be provided for any of these contaminations and a plastic fragment lying above the respective threshold with at least one of these contaminations can be classified as contaminated.

Moreover, one or more classes can also refer to whether or not a plastic fragment, for example a polyurethane foam product, comprises SAN-particles or a predetermined content of SAN particles. For example, SAN content thresholds can be defined and a polyurethane foam product can be classified whether or not it contains SAN particles above the threshold or below the threshold. Such classes can be "high SAN-content" and "low SAN content" classes, or "no-SAN" and "SAN" classes. However, also more than two classes can be defined, for instance, further thresholds for the SAN contents can be defined, to define further SAN classes.

For training the classification model, historical data can be utilized comprising measurement data of a plurality of plastic fragments and a respective classification for the respective plastic fragments. For example, the classification can be provided by an expert as predetermined classification or can be determined during the training process based on the measurement data. Then, any known training method can be utilized for training the classification model based on the historical data. Preferably, for polyurethane foam as plastic fragment, the one or more classes comprise at least one of the following classes: HR-MDI, HR-TDI, HR-TDI CM, HyperSoft-MDI, HyperSoft-TDI, Standard, Standard-CME, Standard-HR-mix-TDI, VE-MDI, more preferably, TDI-Standard and no-Standard. More preferably, the one or more classes comprise at least one of the following: TDI-Standard, MDI-HR, TDI-HR, VE and Latex. The term "TDI" indicates that the polyurethane foam comprises toluene diisocyanate. The term "CM" stands for combustion modified and "CME" for combustion modified ether. The class "Standard-TDI" refers to a flexible foam comprising polyols of different molecular weight in the range 3000 to 3500 and toluene diisocyanate. The term "MDI" indicates that the polyurethane foam comprises 4,4-diphenylmethane diisocyanate. The term "HR" refers to high resilient foams comprising polyols of different molecular weight in the range 5000 to 12000 with MDI and/or TDI. The term "VE" refers to viscoelastic foams comprising polyols of different molecular weight in the range 700 to 2000. A further possible classification can refer to the classes TDI-Standard, HR or VE. Moreover, the classes can also consist of "TDI-standard" and "no standard" in an embodiment.

The classification unit is then configured to classify at least the part of the plastic fragments based on the classification model and the measurement data. In particular, the classification unit is configured to provide the measurement data as input to the classification model, wherein the classification model then outputs the one or more respective classes into which the plastic fragments can be classified by the classification model.

Additionally or alternatively to the classification model providing unit and to the classification unit the apparatus can also comprise a SAN model providing unit and a SAN content determination unit. The SAN model providing unit is configured to providing a machine learning based SAN model. The SAN model providing unit can also be a receiving unit for receiving the SAN model, for instance, via a respective interface such as an interface to the storage or an input unit and to then provide the SAN model. However, the SAN model providing unit can also be the storage unit itself or the respective input unit itself. Generally, the SAN model provided by the SAN model providing unit can be trained already and then stored on a respective storage, for instance, to which the SAN model providing unit has access. However, the providing of the SAN model can also comprise initiating a training or retraining of a respective machine learning based model for a specific case based on respective training data, wherein the SAN model is then provided after the training process is completed. Thus, the same measurement data cannot only be utilized for classification of plastic fragments, but provided as input to another model, here, the SAN model, for determining the SAN content of the plastic fragments.

The SAN model is configured for determining a SAN content in at least the part of the plastic fragments that has been subjected to the spectroscopy, preferably Raman spectroscopy. For most cases, the SAN content of a part of the plastic fragments will also be the content in other parts of the plastic fragments, since it is common that a homogeneous plastic product is already provided to the recycling process. However, if a heterogeneous plastic product is provided to a recycling process, the same procedure as described here, i.e., the measurement of the spectrum and the determination of the SAN content, can also be applied to different plastic fragments. The provided SAN model is then adapted to determine the SAN content of a respective plastic fragments based on the measurement data. In particular, the SAN model is a machine learning based model that has been parameterized, i.e. trained, based on historical training data, to determine the SAN content based on the measurement data. Generally, the SAN model can be based on any known machine learning algorithm, like a neural network, a regression model, or a classification algorithm, etc. In particular, the SAN model can be based on the same algorithm as the classification model, however, it can also be based on a different algorithm. It has been found by the inventors that, in particular, a SAN model comprising a Partial Least Square-Discriminant analysis algorithm or a vector support machine pro-vides accurate results while the training and also the application efforts, in particular, with respect to computational resources, is in an acceptable range to still allow for a fast determination of the SAN content, in particular, for a real-time determination of the SAN content that allows for a real-time controlling of the ASR recycling process, for instance, for a real-time sorting of respective plastic fragments. However, also other machine learning based models like neural networks can be trained for this task. The provided SAN model has generally been trained before being provided by the SAN model providing unit by utilizing historical training data comprising historical measurement data of different plastic fragments and respective SAN contents of the plurality of different plastic fragments. For example, for different plastic fragments a SAN content can be measured in a laboratory or plastic fragments with known SAN content can be utilized. Respective measurement data can then be acquired in the same way as will be the case during the application of the model, for instance, by also using a handheld device or a respective process-integrated device and a respective trainable model can then be trained by parameterizing the respective parameters of the model utilizing known training methods. For example, supervised but also unsupervised training methods can be utilized, respectively.

The SAN content determination unit is then configured to determine based on the pro-vided SAN model and the measurement data the SAN content in at least the part of the plastic fragments for which the measurement data has been acquired. In particular, the acquired measurement data is provided as input to the SAN model, wherein the SAN model then provides as output the respective SAN content. Generally, the determined SAN content can refer to a specific SAN content value, like the amount of SAN particles per weight. However, the determined SAN content can also be determined as a percent-age value based on a reference of a Standard SAN content of known mixtures of respective plastic fragments. Preferably, the SAN content is provided as the amount of SAN particles per volume. In particular, the determined SAN content can also be a simple indicator whether the SAN content lies above or below one or more predetermined thresholds. In the last case the SAN content determination can also be regarded as a classification of the plastic fragments into classes defined by the SAN content.

The control data generation unit is then configured to generate control data for controlling at least the part of the ASR recycling process based on the classification of the part of the plastic fragments. Additionally or alternatively, the control data generation unit can then generate control data for controlling at least the part of the ASR recycling process based on the determined SAN content of the part of the plastic fragments. In particular, both the classification and the determined SAN content can be utilized for generating the control data.

For example, predetermined rules can be utilized that determine how respective process parameters are to be set based on the classification and/or the SAN content, wherein the control data can then be generated such that it causes a setting of the respective parameters. Preferably, the control data is configured for controlling a sorting process being part of the ASR recycling process such that different plastic fragments are sorted based on the classification and/or the SAN content of the respective plastic fragments. For example, the control data can cause information indicative of the determined classification and/or SAN content of a plastic fragment to be provided to an interface utilized by an employee that sorts the respective plastic fragments based on their classification and/or SAN content. The interface can then indicate to the employee how the plastic fragment has to be sorted based on the determined classification and/or SAN content, for instance, by providing a visual or audio signal. Additionally or alternatively directly the determined classification and/or SAN content can be provided to the employee via the interface so that the employee can decide or control the sorting of the plastic fragment. However, the control data can also be configured to cause an automatic sorting of the plastic fragments based on the classification and/or SAN content. For example, a mechanic sorting using pressurized air or other machine sorting mechanisms can be controlled utilizing the control data such that respectively provided plastic fragments are sorted automatically based on the classification and/or SAN content. For example, one or more thresholds can be provided with respect to the SAN content such that the plastic fragments are sorted based on whether they are above or below a respective SAN content threshold. Additionally or alternatively, the plastic fragments can be sorted per class, i.e. plastic fragments belonging to the same class can be sorted together. How-ever, the sorting can also be performed with the goal to provide homogeny foam recycling batches. In this case the determined classification and/or SAN content can be utilized to sort the plastic fragments such that a specific homogenization goal is reached for each recycling batch comprising a predetermined amount of plastic fragments. For example, a goal can be to reach a predetermined SAN-content, or predetermined amounts of respectively used isocyanates, e.g. TDI and MDI, and polyols in case of plastic fragments based on polyurethanes. This allows already in a sorting process to provide a more homogeneous input to the respective chemical recycling process such that the chemical recycling process can be adapted more optimally to the respective homogeneous material, i.e. recycling batch, with respect to the content.

Additionally or alternatively, the control data is configured for controlling process parameters of a sorting unit, a comminution unit, a storing unit, a transportation unit and/or a chemical reaction unit being part of the recycling process based on the classification and/or SAN content. The reaction unit may comprise a chemical lysis reaction. In particular, reaction temperatures, reaction pressure, residence time, and/or reagents con-centration, can be adapted based on the classification and/or SAN content. For example, also in this case predefined rules can be utilized that determine the process parameters with respect to the classification and/or SAN content. In particular, it is preferred that based on the classification and/or SAN content it is determined to utilize one of a plurality of possible predefined process parameter sets for the chemical recycling process with respective sets of parameters.

In an embodiment, the apparatus further comprises a) a model providing unit for providing a machine learning based SAN model for determining a SAN content in the part of the plastic fragments, wherein the SAN model has been trained utilizing historical training data comprising historical measurement data of different plastic fragments and a respective SAN content of the plastic fragments to determine the SAN content in a plastic fragment based on the measurement data, b) a SAN content determination unit for determining the SAN content in the at least the part of the plastic fragments based on the SAN model and the measurement data, wherein the control data generation unit is configured for generating control data for controlling at least a part of the ASR recycling process further based on the determined SAN content of the part of the plastic fragments.

In a further aspect of the invention, a system is presented for generating control data for controlling at least a part of an ASR recycling process for recycling plastic fragments contained in an ASR plastic mix, wherein the system comprises a) a measurement device configured for performing a spectroscopy and measuring a spectrum of at least a part of the plastic fragments for generating and providing measurement data indicative of the measurement, and b) an apparatus according to any of the preceding claims. Preferably, the spectroscopy is selected from a Raman spectroscopy, a MIR spectroscopy, a LlF spectroscopy and/or a Terahertz spectroscopy, and the respective spectrum is selected from a Raman spectrum, a MIR spectrum, a LlF spectrum and/or a Terahertz spectrum.

In a further aspect of the invention, an apparatus is presented for training a machine learning classification model utilizable in the apparatus as described above, wherein the apparatus comprises a) a historical data providing unit for providing historical data for training a classification model, wherein the historical data comprises i) measurement data of a plurality of plastic fragments of different types and with different additives, and ii) a respective classification for each of the plurality of plastic fragments, wherein the measurement is indicative of a spectrum received from the plastic fragments when subjected to spectroscopy, b) a model providing unit for providing a trainable machine learning based classification model, c) a training unit for training the trainable classification model based on the historical data such that the trained classification model is configured to determine a class of a plastic fragment based on the respective measurement data of the plastic fragments, and d) a trained model providing unit for providing the trained classification model. Preferably, the measurement in step ii) above is indicative of a Raman spectrum received from the plastic fragments when subjected to Raman spectroscopy, indicative of a MIR spectrum received from the plastic fragments when subjected to MIR spectroscopy, indicative of a LlF spectrum received from the plastic fragments when subjected to LlF spectroscopy, and/or indicative of a Terahertz spectrum received from the plastic fragments when subjected to Terahertz spectroscopy,
In a further aspect, a computer-implemented method is presented for generating control data for controlling at least a part of an automotive shredder residue (ASR) recycling process for recycling plastic fragments contained in an ASR plastic mix, wherein the plastic fragments are provided to a recycling process, wherein the provided plastic fragments optionally comprise a polyurethane foam product, a polyurethane foam product with styrene-acrylonitrile (SAN) particles, a polyurethane foam product comprising different polyurethane foam types, a polyolefin product, an acrylonitrile-butadiene-styrene product, a polyamide product, a polyoxymethylene product, a polyethylene terephthalate product, a polybutylene terephthalate product, a halogen-containing polymer product, or a product comprising any mixture thereof, wherein the method comprises a) providing measurement data associated with at least a part of the plastic fragments, wherein the measurement data is indicative of a spectrum received from the part of the plastic fragments when subjected to spectroscopy, b) providing a plastic classification model for classifying the at least a part of the plastic fragments into a class of one or more plastic classes, wherein the plastic classes depend on the plastic fragment types and/or further additives in the plastic fragments, and wherein the classification model is a machine learning based model trained utilizing historical data to classify plastic fragments into a class of the one or more classes based on the measurement data, c) classifying the at least a part of the plastic fragments based on the classification model and the measurement data, d) generating control data for control-ling at least a part of the ASR recycling process based on the classification of the part of the plastic fragments. Preferably, the measurement data in step a) above is indicative of a Raman spectrum received from the part of the plastic fragments when subjected to Raman spectroscopy, indicative of a MIR spectrum received from the part of the plastic fragments when subjected to MIR spectroscopy, indicative of a LlF spectrum received from the part of the plastic fragments when subjected to LlF spectroscopy, and/or indicative of a Terahertz spectrum received from the part of the plastic fragments when subjected to Terahertz spectroscopy,

In a further aspect, a computer-implemented method is presented for training a machine learning classification model utilizable in the apparatus as described above, wherein the method comprises a) providing historical data for training a classification model, wherein the historical data comprises i) measurement data of a plurality of plastic fragments of different types and with different additives, and ii) a respective classification for each of the plurality of plastic fragments, wherein the measurement is indicative of a spectrum received from the plastic fragments when subjected to spectroscopy, b) providing a trainable machine learning based classification model, c) training the trainable classification model based on the historical data such that the trained classification model is configured to determine a class of plastic fragments based on the respective measurement data of the plastic fragments, and d) providing the trained classification model. Preferably, the measurement in step ii) above is indicative of a Raman spectrum received from the plastic fragments when subjected to Raman spectroscopy, indicative of a MIR spectrum received from the plastic fragments when subjected to MIR spectroscopy, indicative of a LlF spectrum received from the plastic fragments when subjected to LlF spectroscopy, and/or indicative of a Terahertz spectrum received from the plastic fragments when subjected to Terahertz spectroscopy.

In a further aspect, an automotive shredder residue (ASR) recycling process is presented for recycling plastic fragments contained in an ASR plastic mix, wherein the ASR recycling process is controlled utilizing control data generated by the apparatus as described above and/or the method as described above.

In a further aspect, a computer program product is presented for generating control data for controlling at least a part of an automotive shredder residue (ASR) recycling process for recycling plastic fragments contained in an ASR plastic mix, wherein the computer program product comprises program code means for causing an apparatus as de-scribed above to carry out the method as described above.

In a further aspect, a computer program product is presented for generating control data for training a machine learning classification model utilizable in the apparatus as described above, wherein the computer program product comprises program code means for causing an apparatus as described above to carry out the method as described above.

In a further aspect, an apparatus is presented for generating control data for controlling at least a part of an ASR recycling process for recycling plastic fragments contained in an ASR plastic mix, wherein the plastic fragments are provided to a recycling process, wherein the provided plastic fragments optionally comprise a polyurethane foam product, a polyurethane foam product with styrene-acrylonitrile (SAN) particles, a polyurethane foam product comprising different polyurethane foam types, a polyolefin product, an acrylonitrile-butadiene-styrene product, a polyamide product, a polyoxymethylene product, a polyethylene terephthalate product, a polybutylene terephthalate product, a halogen-containing polymer product, or a product comprising any mixture thereof, wherein the apparatus comprises a) a measurement data providing unit for providing measurement data associated with at least a part of the plastic fragments, wherein the measurement data is indicative of a spectrum received from the part of the plastic fragments when subjected to spectroscopy, b) providing a machine learning based SAN model for determining an SAN content in the part of the plastic fragments, wherein the SAN model has been trained utilizing historical training data comprising measurement data of different plastic fragments and a respective SAN content of the plastic fragments to determine the SAN content in a plastic fragment based on the measurement data, c) determining the SAN content in the at least a part of the plastic fragments based on the SAN model and the measurement data, d) generating control data for controlling at least a part of the ASR recycling process based on the determined SAN content of the part of the plastic fragments. In an embodiment, the control data is configured for controlling a sorting process being part of ASR recycling process such that different plastic fragments are sorted based on the SAN content of the respective plastic fragments. In an embodiment, the control data is configured for controlling process parameters of a sorting unit, a comminution unit, a storing unit, a transportation unit and/or a chemical reaction unit, for example a chemical lysis reaction, being part of the recycling process based on the SAN content. Preferably, the measurement data in step a) above is indicative of a Raman spectrum received from the part of the plastic fragments when subjected to Raman spectroscopy, indicative of a MIR spectrum received from the part of the plastic fragments when subjected to MIR spectroscopy, indicative of a LlF spectrum received from the part of the plastic fragments when subjected to LlF spectroscopy, and/or indicative of a Terahertz spectrum received from the part of the plastic fragments when subjected to Terahertz spectroscopy,
In an embodiment, the SAN model comprises a Partial Least Square-Discriminant analysis algorithm or vector support machine. In an embodiment, the plastic fragments are subjected to laser light in the near infrared part of the spectrum for the Raman spectroscopy. In an embodiment, the apparatus further comprises a) a classification model providing unit for providing a foam classification model for classifying the at least a part of the plastic fragments into a class of one or more plastic classes, wherein the plastic classes depend on the plastic fragment types and/or further additives in a plastic fragment, and wherein the classification model is a machine learning based model trained utilizing historical data to classify a plastic fragment into a class of the one or more classes based on the measurement data, b) a classification unit for classifying the at least a part of the plastic fragments based on the classification model and the measurement data, wherein the control data generation unit is configured for generating control data for controlling at least a part of the ASR recycling process further based on the classification of the part of the plastic fragments. In an embodiment where at least a part of the plastic fragments is based on polyurethane, the one or more classes comprise at least one of the following classes: HR-MDI, HR-TDI, HR-TDI CM, HyperSoft-MDI, HyperSoft-TDI, Standard, Standard-CME, Standard-HR-mix-TDI, VE-MDI, more preferably, TDI-Standard and no-Standard. In an embodiment, the classification model comprises a Partial Least Square-Discriminant analysis. However, in another embodiment the classification model can also comprise a support vector machine.

In a further aspect a system is presented for generating control data for controlling at least a part of an ASR recycling process, wherein the system comprises a) a measurement device configured for performing a spectroscopy and measuring a spectrum of the part of the plastic fragments for generating and providing measurement data indicative of the measurement, and b) an apparatus according to any of the preceding claims. Preferably, the measurement device in step a) above is configured for performing a Raman spectroscopy and measuring a Raman spectrum of the part of the plastic fragments, configured for performing a MIR spectroscopy and measuring a MIR spectrum of the part of the plastic fragments, configured for performing a LlF spectroscopy and measuring a LlF spectrum of the part of the plastic fragments, and/or configured for performing a Terahertz spectroscopy and measuring a Terahertz spectrum of the part of the plastic fragments.

In a further aspect an apparatus is presented for training a machine learning SAN model utilizable in the apparatus as described above, wherein the apparatus comprises a) a historical data providing unit for providing historical data for training the SAN model, wherein the historical data comprises i) measurement data of a plurality of plastic fragments with different SAN contents, and ii) a respective SAN content for each of the plurality of plastic fragments, wherein the measurement is indicative of a spectrum received from the plastic fragments when subjected to spectroscopy, b) a model providing unit for providing a trainable machine learning based SAN model, c) a training unit for training the trainable SAN model based on the historical data such that the trained SAN model is configured to determine the SAN content of a plastic fragment based on the respective measurement data of the plastic fragments, and d) a trained model providing unit for providing the trained SAN model. Preferably, the measurement in step ii) above is indicative of a Raman spectrum received from the plastic fragments when subjected to Raman spectroscopy, indicative of a MIR spectrum received from the plastic fragments when subjected to MIR spectroscopy, indicative of a LlF spectrum received from the plastic fragments when subjected to LlF spectroscopy, and/or indicative of a Terahertz spectrum received from the plastic fragments when subjected to Terahertz spectroscopy.

In a further aspect a method is presented for generating control data for controlling at least a part of an ASR recycling process for recycling plastic fragments contained in an ASR plastic mix, wherein the plastic fragments are provided to a recycling process, wherein the provided plastic fragments optionally comprise a polyurethane foam product, a polyurethane foam product with styrene-acrylonitrile (SAN) particles, a polyurethane foam product comprising different polyurethane foam types, a polyolefin product, an acrylonitrile-butadiene-styrene product, a polyamide product, a polyoxymethylene product, a polyethylene terephthalate product, a polybutylene terephthalate product, a halogen-containing polymer product, or a product comprising any mixture thereof, wherein the method comprises a) providing measurement data associated with at least a part of the plastic fragments, wherein the measurement data is indicative of a spectrum received from the part of the plastic fragments when subjected to spectroscopy, b) providing a machine learning based SAN model for determining an SAN content in the part of the plastic fragments, wherein the SAN model has been trained utilizing historical training data comprising measurement data of different plastic fragments and a respective SAN content of the plastic fragments to determine the SAN content in a plastic fragment based on the measurement data, c) determining the SAN content in the at least a part of the plastic fragments based on the SAN model and the measurement data, d) generating control data for controlling at least a part of the ASR recycling process based on the determined SAN content of the part of the plastic fragments. Preferably, the measurement data in step a) above is indicative of a Raman spectrum received from the part of the plastic fragments when subjected to Raman spectroscopy, indicative of a MIR spectrum received from the part of the plastic fragments when subjected to MIR spectroscopy, indicative of a LlF spectrum received from the part of the plastic fragments when subjected to LlF spectroscopy, and/or indicative of a Terahertz spectrum received from the part of the plastic fragments when subjected to Terahertz spectroscopy,
In a further aspect a computer-implemented method is presented for training a machine learning SAN model utilizable in the apparatus as described above, wherein the method comprises a) providing historical data for training the SAN model, wherein the historical data comprises i) measurement data of a plurality of plastic fragments with different SAN contents, and ii) a respective SAN content for each of the plurality of plastic fragments, wherein the measurement data is indicative of a spectrum received from at least a part of a respective plastic fragment when the part of the respective plastic fragment is subjected to light in a predetermined wavelength range, b) providing a trainable machine learning based SAN model, c) training the trainable SAN model based on the historical data such that the trained SAN model is configured to determine the SAN content of a plastic fragment based on the respective measurement data of the polyurethane foam product, and d) providing the trained SAN model.

In a further aspect, an ASR recycling process is presented for recycling plastic fragments contained in an ASR plastic mix, wherein the ASR recycling process is controlled utilizing control data generated by the apparatus as described above and/or the method as described above.

In a further aspect, a computer program product is presented for generating control data for controlling at least a part of an ASR recycling process for recycling plastic fragments contained in an ASR plastic mix, wherein the computer program product comprises program code means for causing an apparatus as described to carry out the method as described above.

In a further aspect, a computer program product is presented for generating control data for training a machine learning SAN model utilizable in the apparatus as described above, wherein the computer program product comprises program code means for causing an apparatus according to claim 10 to carry out the method as described.

It shall be understood that the apparatuses as described above, the methods as de-scribed above and the computer program products as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### Detailed description

Further details and features of the invention result from the following description of preferred embodiments, in particular in conjunction with the dependent claims. The respective features may be realized individually or in combination with one another. The invention is not limited to the embodiments. The embodiments are shown schematically in the drawings. The drawings are to be understood as schematic representations. They do not represent a limitation of the invention, for example with regard to specific dimensions or design variants. Identical reference numerals in the individual drawings denote identical or functionally identical elements or elements corresponding to one another in terms of their functions. In the figures:
- Fig. 1: shows schematically and exemplarily an embodiment of a system for recycling automotive shredder residue (ASR) comprising an apparatus for generating control data for controlling at least a part of the ASR recycling process,
- Fig. 2: shows schematically and exemplarily a flow chart of a method for generating control data for controlling at least a part of an ASR recycling process,
- Fig. 3: shows schematically and exemplarily a flow chart of a method for training a machine learning based model.

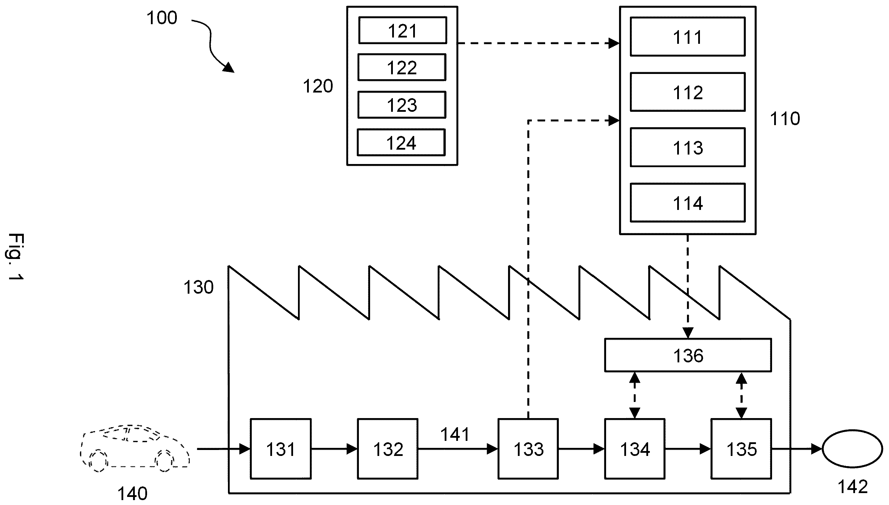

Fig. 1 shows schematically and exemplarily a system 100 for an automotive shredder residue (ASR) recycling process for recycling plastic fragments contained in an ASR plastic mix. The system 100 comprises industrial assets utilizable for performing an ASR recycling process, for instance, an industrial plant 130. Further, the system 100 comprises an apparatus 110 for generating control data for controlling at least a part of the ASR recycling process performed in the industrial plant 130. Optionally, the system 100 can further comprise a training apparatus for training a machine learning based model utilizable by the apparatus 110. The following ASR recycling process is described as being performed as part of an industrial plant 130. However, parts of the process can also be performed by a network of industrial plants at the same or at different industrial plant sites.

In the example shown in Fig. 1, a vehicle 140 is provided to the industrial plant site 130 and is shredded in a vehicle shredding unit 131 as it is common state of the art. Typically, the vehicle 140 is dismantled before shredding it such that most of the easily removable parts of the vehicle 140 have been removed before feeding it to the vehicle shred-ding unit 131. The shredded material that comprises metal components as well as plastic components is fed to a pre-sorting unit 132 where at least the metal components are removed. The remaining material, which is the automotive shredder residue, is typically separated in a so-called shredder light fraction and a shredder heavy fraction. The plastic fragments 141 of interest for chemical recycling are usually contained in the shredder light fraction. Thus, in the example shown in Fig. 1, plastic fragments 141 contained in a shredder light fraction of the automotive shredder residue is further processed in the system 100 according to this embodiment of the invention.

Typically, a shredder light fraction comprises shredded plastic fragments 141 that contain valuable plastic material as well as material that is not suitable for the respective recycling process. The shredded plastic fragments 141 are provided to a measurement unit 133 of the industrial plant site 130. The measurement unit 133 can be realized in form of a handheld device utilized by a respective employee or can also be part, for example, of an automatic measurement asset. For example, the measurement unit 133 can be placed above some kind of movement unit like a conveyor belt on which the respective plastic fragments are moved during the measurement. The measurement unit 133 is configured to subjecting at least a part of the plastic fragments 141 to a Raman spectroscopy. In a preferred embodiment described in the following the light source is an infrared laser, preferably, with a wavelength of 852 nm. Further, the measurement unit 133 comprises means for performing the Raman spectroscopy, in particular, for detecting a Raman spectrum, received from the plastic fragments 141 when subjected to the infrared laser light. For example, the measurement unit 133 can comprise measuring the Raman spectrum reflected from the plastic fragments 141. The Raman spectrum can then, for instance, be digitalized or formatted in any other way that allows for a further processing of the measurement data and then provided to a respective storage unit, not shown, or directly to apparatus 110. In addition or as an alternative, the measurement unit 133 may comprise, for instance, a near-infrared spectroscopy device, a medium-infrared spectroscopy device, a UV-VIS spectroscopy device, an optical camera, a laser induced breakdown spectroscopy device, an X-ray fluorescence device or a THz spectroscopy device.

Based on a respective result of an SAN content determination and/or a respective classification of the plastic fragments 141, as will be described hereafter, with respect to the apparatus 110, the plastic fragments 141 or parts thereof can be transferred to a storage facility for storing the plastic fragments or the plastic fragments can be provided to a sorting facility 134 that is configured for sorting the plastic fragments 141 based on the respective results of the determination of the SAN content and/or the classification of the polyurethane foam product based on the apparatus 110. In this case, plastic fragments that can be recycled, for instance, by the current process performed by the industrial plant site or with the currently utilized process parameters of the recycling process can be directly transferred further to the industrial asset 135 performing the recycling process. Plastic fragments for which the determined SAN content and/or the classification indicates the recycling at a later point, for instance, with different processing parameters, can then also be transferred from the sorting facility 134 to the storage unit. Plastic fragments that are not suitable for the recycling process are removed in the sorting unit 134. The sorting process 134 and/or the industrial assets 135 can be controlled by control means 136. Control means 136 can generally be part of a respective industrial plant control and management system and are configured to manipulate one or more process parameters determining the sorting process and/or the recycling process performed by the industrial assets 135. The control means 136 may be configured to control further parts of the ASR recycling plant, for example one or more of the further units shown in Fig. 1 as well as units not shown in Fig. 1 like milling units, pressing units, transportation units.

The pre-processed plastic fragments 141 may be subjected to a chemical recycling process as an industrial asset 135. The scientific publication by M. Grdadolnik et al. titled Insight into Chemical Recycling of Flexible Polyurethane Foams by Acidolysis, ACS Sustainable Chem. Eng. 2022, 10, 3, 1323-1332 describes an exemplary chemical recycling process for polyurethane foams. Other examples of chemical recycling processes are disclosed, for instance in documents DE 102016122275 A1, DE 102013106364 A1, WO 2021023889 A1, and US 20220251328 A1. These respective chemical processes can be performed utilizing respective chemical operation units, like a reactor, a filtration unit, a distillation unit, etc. The resulting one or more recycling products can then be subjected to respective post-processing steps, including quality checking, packaging, etc. The above-described ASR recycling process then results in a respective final recycled product 142.

The apparatus 110 is configured to provide control signals, for example, to the control-ling unit 136 and/or to the sorting facility 134, for controlling the respective polyurethane foam product recycling process. The apparatus 110 can be realized, for instance, as part of the control unit 136 but can also be realized as a standalone computer system that is communicatively coupled, for instance, with the control unit 136. Generally, the apparatus 110 can be realized in form of any computing device comprising respective processors that can perform the functions defined by the units of the apparatus 110. For example, the apparatus 110 can be realized in form of a general or dedicated computing device or network of computing devices. The apparatus 110 comprises a measurement data providing unit 111, a SAN model and/or classification model providing unit 112, a SAN content determination and/or classification unit 113 and a control data generation unit 114.

The measurement data providing unit 111 is configured to provide the respective measurement data of the measurement unit 133. For example, the measurement data providing unit 111 can be an interface that allows to receive the data from the measurement unit 133 and to provide the received data from the measurement unit 133, for instance, to the SAN content determination and/or classification unit 113. However, the measurement data providing unit 111 can also be configured to access a storage unit on which the measurement data of the measurement unit 133 is already stored, for instance, in a long-term or short-term storage.

The classification model and/or SAN model providing unit 112 is configured to provide a machine learning based classification model and/or SAN model for classifying a part of the plastic fragments and/or determining an SAN content in the part of the plastic fragments for which the measurement data has been provided. The plastic classification model is configured for classifying the plastic fragments 141 into different plastic classes. Generally, a plastic fragment can comprise more than one plastic fragment type and/or can comprise further additives to the plastic fragment. Thus, classes can be defined that classify the plastic fragments based on the plastic fragment types and/or further additives in the plastic fragments. Generally, the plastic fragment types and/or further additives in the plastic fragments can also influence the recycling process and thus influence the quality of the recycled product. Accordingly, a classification allows to sort the plastic fragments based on the respective predetermined classes such that only recycling processes are applied to a batch of plastic fragment in the same class that are suitable for this class and/or the processing parameters of the chemical recycling process can be adapted to the determined plastic fragment class in order to allow the production of a recycling product with a desired quality.

The classification model is preferably a machine learning based model that is trained utilizing historical data comprising a) measurement data of a plurality of respective plastic fragments and b) the respectively determined class for each of the different plastic fragments. For example, for training the classification model, the same plastic fragments can be utilized that are utilized for training a SAN model, as described below, wherein in this case the measurement data is already provided. However, also a different batch of plastic fragments can be utilized for the training, wherein in this case first the measurement data has to be acquired. The class of a respective plastic fragment can then be determined, for instance, based on information of a producer or vendor of the plastic fragment indicating the respective plastic fragment types utilized in the plastic fragment or also based on respective laboratory measurements of the plastic fragment types. Also the classification model is preferably based on a Partial Least Square-Discriminant analysis algorithm and the training can be performed based on a historical data. The trainable classification model refers to a respective algorithm comprising parameters that are determined during the training process of the trainable classification model and thus reflect in the trained classification model the functional relation between the measurement data and respective classes. Thus, the training of the trainable classification model can also be regarded as a parameterization, i.e. a setting of the parameters, of the trainable classification model. Preferably, the trainable classification model comprises a Partial Least Square-Discriminant analysis algorithm (PLS-DA), since the inventors have found that such an algorithm allows for a suitable accuracy in the determination of the classes with acceptable utilization of computational resources.

In case of a polyurethane foam product as plastic fragment for example, it has been found that it is advantageous to associate each class with a specifically determined number of principle component analysis (PCA) variables. For instance, a Latex class can be associated with two PCA variables, an MDI-HR class and a VE class with five PCA variables, and a Standard class and TDI-HR class with six PCA variables based on the results of a respective PCA analysis.

Generally, it has been found that for different classes mostly different characteristics of the Raman spectrum are utilized for the differentiation and classification. However, also other known machine learning algorithms can be utilized, for instance, neural network algorithms, linear or nonlinear regression algorithms, classification algorithms, etc. Preferably, the classes utilized by the classification model refer to a standard class and a non-standard class. However, the classes can also be more diversified, for instance, the following classes or at least one or more of the following classes can be utilized HR-MDI, HR-TDI, HR-TDI CM, HyperSoft-MDI, HyperSoft-TDI, Standard, Standard-CME, Standard-HR-mix-TDI, VE-MDI, more preferably, TDI-Standard and no-Standard. The term "TDI" indicates that the polyurethane foam comprises toluene diisocyanate. The class "Standard-TDI" refers to a flexible foam comprising polyols of different molecular weight in the range 3000 to 3500 and toluene diisocyanate. The term "MDI" indicates that the polyurethane foam comprises 4,4-diphenylmethane diisocyanate. The term "HR" refers to high resilient foams comprising polyols of different molecular weight in the range 5000 to 12000 with MDI and/or TDI. The term "VE" refers to viscoelastic foams comprising polyols of different molecular weight in the range 700 to 2000. A further possible classification can refer to the classes TDI-Standard, HR or VE.

It has been found by the inventors that the results of the classification allow for a good accuracy if the pre-processing of the measurement data, e.g. the Raman spectra, comprises first determining the first derivative from the respective measurement data and then mean centering the determined measurement data. Moreover, it has been found that the most relevant part of the spectrum for the classification lies in wave-numbers of 1800 cm-1 to 3200 cm-1 measured with an infrared laser, preferably utilizing a wavelength of 852 nm. Although the inventors have found that this pre-processing was in particular suitable for the preferably utilized Partial Least Square-Discriminant analysis, when utilizing other machine learning algorithms also other pre-processing steps or even an omitting of pre-processing steps can result in a suitable accuracy in the performance of the respective machine learning model.

The model providing unit 122 can also be configured as a SAN model providing unit for providing a trainable machine learning based SAN model additionally or alternatively to the classification model. Generally, the SAN model is configured for determining the SAN content of a respective plastic fragment based on the provided measurement data. In particular, a respective trainable machine learning based SAN model can be stored on a storage unit already and be provided by the model providing unit. However, the model providing unit can also be configured to receive the trainable machine learning based SAN model, for instance, via an input unit or user interface where a user can input or select a respective trainable machine learning based SAN model. The trainable SAN model refers to a respective algorithm comprising parameters that are determined during the training process of the trainable SAN model and thus reflect in the trained SAN model the functional relation between the measurement data and the SAN content. Thus, the training of the trainable SAN model can also be regarded as a parameterization, i.e. a setting of the parameters, of the trainable SAN model. Preferably, the trainable SAN model comprises a Partial Least Square-Discriminant analysis algorithm or a support vector machine, since the inventors have found that such an algorithm allows for a suitable accuracy in the determination of the SAN content with acceptable utilization of computational resources. However, also other known machine learning algorithms can be utilized, for instance, neural network algorithms, linear or nonlinear regression algorithms, classification algorithms, etc.

The classification model and the SAN model are both machine learning based and can be trained utilizing historical training data comprising a) historical measurement data of different polyurethane foam products and b) a respective plastic class or SAN content, respectively, of the plastic fragments. For example, the classification model and the SAN model can be trained utilizing training apparatus 120, described in the following.

Training apparatus 120 comprises a historical data providing unit 121, a model providing unit 122, a training unit 123 and a trained model providing unit 124. The historical data providing unit 121 is configured for providing historical data for training the classification model and/or the SAN model. For example, the historical data can be stored on a respective storage unit not shown in Fig. 1. Generally, for training an SAN model the historical data comprises a) measurement data of a plurality of plastic fragments with different SAN contents, and b) the respective SAN content for each of the plurality of plastic fragments, and for training a classification model the historical data comprises a) measurement data of a plurality of plastic fragments from different classes, and b) the respective classes for each of the plurality of plastic fragments. For example, the historical data can comprise data that has been acquired from plastic fragments with known SAN contents or that can be classified based on known isocyanate, polyol and/or additive content in case of a polyurethane foam product. For example, the SAN contents of a plurality of plastic fragments can be measured utilizing known measurement methods and from the same plastic fragments respective measurement data, e.g. Raman spectra, can be acquired. However, in some cases, the SAN content can also be generally known, for instance, provided and guaranteed by the vendor or producer of the original plastic material. In this case, only the respective measurement data of the plastic material has to be acquired. The historical data can then be stored on a respective storage unit.

The training unit 123 can then be configured for training the trainable classification model and/or SAN model utilizing historical data. In particular, any known training algorithms, for instance, supervised or unsupervised training algorithms, can be utilized for training the classification model and/or SAN model based on the historical data. In particular, the classification model and/or SAN model is trained utilizing the historical data such that the trained classification model and/or SAN model is configured to determine the plastic class and/or SAN content, respectively, of a plastic fragment based on the respective measurement data of the plastic fragment with a predetermined accuracy. The trained model providing unit 124 is then configured for providing the trained classification model and/or SAN model. For example, the trained classification model and/or SAN model can be provided to a storage unit from which the classification model and/or SAN model providing unit 112 can access the classification model and/or SAN model or if the classification model and/or SAN model has currently been trained or retrained, the trained model providing unit 124 can directly provide the classification model and/or SAN model to the trained classification model and/or SAN model providing unit 112. In a preferred embodiment, the machine learning based classification model and/or SAN model is a Partial Least Square-Discriminant analysis algorithm or a sup-port vector machine with a radial basis function. It has been found that such a model can be trained successfully utilizing between 100 and 200 historical data samples.

The classification unit 113 can then be configured to utilize the classification model to classify a part of the plastic fragments based on the measurement data. Alternatively or additionally the unit 113 can also be a SAN content determination unit 113 that is configured for determining the SAN content in at least the part of the plastic fragments. In particular, the classification and/or SAN content determination unit is configured to utilize the provided classification and/or SAN model and the provided measurement data to determine the respective plastic class and/or SAN content, respectively. For example, the classification and/or SAN content determination unit 113 can be configured to provide the measurement data as input to the respective classification and/or SAN model such that the output refers to the foam class and/or SAN content, respectively. Optionally, the classification and/or SAN content determination unit 113 can also be configured for pre-processing the respective measurement data, for instance, by filtering out strong outliers that might impact the results of the classification and/or SAN content determination, by removing parts of a spectrum that have been found to be irrelevant for the determination of the classification and/or SAN content, etc. However, such pre-processing can also be omitted if the classification and/or SAN model has been trained on the raw data or can be performed by a respective part of the classification and/or SAN model itself.

It has been found by the inventors that the results of the SAN content determination allow for a good accuracy if the pre-processing of the measurement data, e.g. the Raman spectra, comprises first determining the first derivative from the respective measurement data and then mean centering the determined measurement data. Moreover, it has been found that the most relevant part of the spectrum for the classification lies in wavenumbers of 2525 cm-1 to 2475 cm-1 measured with an infrared laser, preferably utilizing a wavelength of 852 nm. In particular, a spectral peak at 2500 cm-1 characterized the SAN content. Although the inventors have found that this pre-processing was in particular suitable for the preferably utilized Partial Least Square-Discriminant analysis algorithm, when utilizing other machine learning algorithms also other pre-processing steps or even an omitting of pre-processing steps can result in a suitable accuracy in the performance of the respective machine learning model.

The control data generation unit 114 is then configured to generate control data for controlling at least a part of the ASR recycling process performed by industrial plant 130 based on the determined classification and/or SAN content of the part of the plastic fragments 141. For example, the control data can be configured for controlling the sorting of the plastic fragments, for instance by a sorting facility 134. In particular, it can be useful to setup the chemical recycling process performed by the process assets 135 for a specific plastic class and/or SAN content and to then sort the plastic fragments until a batch of plastic fragments with the respective foam class and/or SAN content can be provided to the recycling process. Plastic fragments with a different classes and/or SAN content can then be transferred to a respective storage unit and recycled in another batch with the respective class and/or SAN content. Moreover, the sorting can also refer to mixing plastic fragments with different classes and/or SAN content, for example, from the storage unit, such that a respective predetermined content is provided by a batch of plastic fragments processed in the chemical recycling process at the same time. This allows to also recycle plastic fragments, for instance, with a high SAN content that are often difficult to recycle, when mixed together with plastic fragments with a very low or no SAN content at all. Additionally or alternatively, the control data can be configured for controlling process parameters of the chemical recycling process, in particular, of a chemical lysis reaction. For example, the control data can be provided to the controlling unit 136 and cause the control unit 136 to adapt a respective process parameter of the chemical lysis reaction in accordance with the controlling data. For example, predetermined rules can be utilized that indicate how process parameters are to be changed based on the classification and/or SAN content. Preferably, the controlling of the sorting of the plastic fragments before being provided to the chemical reaction process and the controlling of the chemical reaction process are combined. This allows to produce a final recycling product 142 with a desired quality even in the presence of different classes and/or SAN contents.

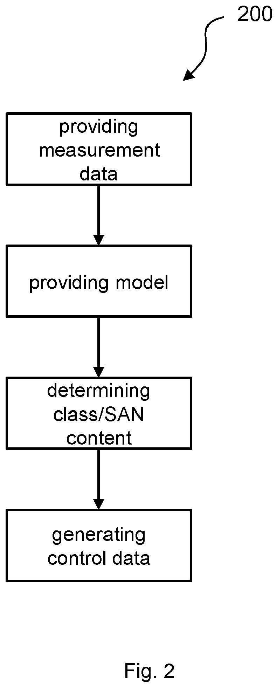

Fig. 2 shows schematically and exemplarily a flow chart of a method for generating control data for controlling at least a part of an ASR recycling process for recycling plastic fragments contained in an ASR plastic mix. In particular, the method can be performed by the apparatus 110 as described with respect to Fig. 1. In particular, the method 200 comprises a first step of providing measurement data associated with at least a part of the plastic fragments as described, for instance, with respect to the measurement data providing unit 111 of Fig. 1. In a next step, a machine learning based classification and/or SAN model is provided for determining the plastic class and/or SAN content in a part of the plastic fragments, for instance, in accordance with the principles described above with respect to the classification and/or SAN model providing unit 112 and the training apparatus 120. In a further step, the classification and/or SAN content is determined for the plastic fragments based on the classification and/or SAN model and the measurement data. In a last step, control data is generated for controlling at least the part of the ASR recycling process based on the determined classification and/or SAN content of the part of the plastic fragments.

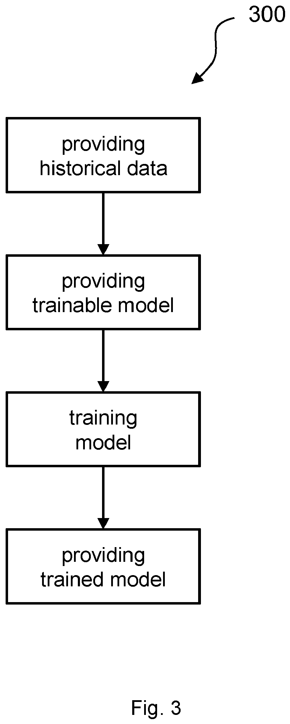

Fig. 3 shows schematically and exemplarily a training method 300 for training a machine learning based classification and/or SAN model, for instance, in accordance with the principles described with respect to the training apparatus 120 in Fig. 1. In a first step, the method 300 comprises providing historical data for training the classification and/or SAN model. For training a SAN model the historical data comprises a) measurement data of a plurality of plastic fragments with different SAN content and b) a respective SAN content for each of the plurality of plastic fragments. For training a classification model, the training data comprises a) measurement data of a plurality of plastic fragments of different types and with different additives, i.e. of different classes, and b) a respective class for each of the plurality of plastic fragments. Further, the method 300 comprises a step of providing a respectively trainable machine learning based classification and/or SAN model. In a next step, the trainable machine learning based classification and/or SAN model can be trained utilizing the historical data such that the trained classification and/or SAN model is configured to determine the SAN content of a plastic fragment and/or classify a respective plastic fragment based on the respective measurement data of the plastic fragments. In a last step, the trained classification and/or SAN model can then be provided.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of the measurement data and the classification and/or SAN model, the determining of the foam class and/or SAN content, the generating of control data, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable com-ponent were binary, or it may be structured to be interpretable and/or compiled, for instance, whether in a single stage or in multiple stages, so as to generate such binary that is directly interpretable by the processors. In other instances, structures may be hard coded or hard-wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hard-ware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired pro-gram code means in the form of computer-executable instructions or data structures and which can be accessed by a general-purpose or special-purpose computing system or combinations. While not all computing systems require a user interface, in some embodiments, the computing system includes a user interface system for use in inter-facing with a user. User interfaces act as input or output mechanism to users for in-stance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

## Claims

1. Apparatus for generating control data for controlling at least a part of an automotive shredder residue (ASR) recycling process for recycling plastic fragments contained in an ASR plastic mix, wherein the plastic fragments are provided to a recycling process, wherein the provided plastic fragments optionally comprise a polyurethane foam product, a polyurethane foam product with styrene-acrylonitrile (SAN) particles, a polyurethane foam product comprising different polyurethane foam types, a polyolefin product, an acrylonitrile-butadiene-styrene product, a polyamide product, a polyoxymethylene product, a polyethylene terephthalate product, a polybutylene terephthalate product, a halogen-containing polymer product, or a product comprising any mixture thereof, wherein the apparatus comprises:
a measurement data providing unit for providing measurement data associated with at least a part of the plastic fragments, wherein the measurement data is indicative of a spectrum received from the part of the plastic fragments when subjected to spectroscopy,
a classification model providing unit for providing a plastic classification model for classifying the at least a part of the plastic fragments into a class of one or more plastic classes, wherein the plastic classes depend on the plastic fragment types and/or further additives in the plastic fragments, and wherein the classification model is a machine learning based model trained utilizing historical data to classify plastic fragments into a class of the one or more classes based on the measurement data,
a classification unit for classifying the at least a part of the plastic fragments based on the classification model and the measurement data,
a control data generation unit for generating control data for controlling at least a part of the ASR recycling process based on the classification of the part of the plastic fragments.

2. The apparatus according to claim 1, wherein the control data is configured for controlling a sorting process being part of the ASR recycling process such that different plastic fragments are sorted based on the classification of the respective plastic fragments.

3. The apparatus according to any of claims 1 and 2, wherein the control data is configured for controlling process parameters of a sorting unit, a comminution unit, a storing unit, a transportation unit and/or a chemical reaction unit being part of the recycling process based on the classification.

4. The apparatus according to any of the preceding claims, wherein the classification model comprises a Partial Least Square-Discriminant analysis algorithm.

5. The apparatus according to any of the preceding claims, wherein the spectrum is a Raman spectrum, a mid-infrared (MIR) spectrum, a laser-induced fluorescence (LIF) spectrum and/or a Terahertz spectrum, and the spectroscopy is the corresponding Raman spectroscopy, MIR spectroscopy, LlF spectroscopy and/or Terahertz spectroscopy.

6. The apparatus according to any of the preceding claims, wherein the part of the plastic fragments is subjected to laser light in the near infrared part of the spectrum for the Raman spectroscopy, preferably, utilizing a wavelength between 800 nm to 900 nm, more preferably, a wavelength of 852 nm.

7. The apparatus according to any of the preceding claims, wherein the plastic fragments comprise polyurethane foam products and the one or more classes comprise at least one of the following classes: HR-MDI, HR-TDI, HR-TDI CM, HyperSoft-MDI, HyperSoft-TDI, Standard, Standard-CME, Standard-HR-mix-TDI, VE-MDI, more prefer-ably, TDI-Standard, Latex and no-Standard.

8. The apparatus according to any of the preceding claims, wherein the apparatus further comprises:
a SAN model providing unit for providing a machine learning based SAN model for determining a SAN content in the part of the plastic fragments, wherein the SAN model has been trained utilizing historical training data comprising historical measurement data of different plastic fragments and a respective SAN content of the plastic fragments to determine the SAN content in a plastic fragment based on the measurement data,
a SAN content determination unit for determining the SAN content in the at least a part of the plastic fragments based on the SAN model and the measurement data,
wherein the control data generation unit is configured for generating control data for controlling at least a part of the ASR recycling process further based on the determined SAN content of the part of the plastic fragments.

9. A system for generating control data for controlling at least a part of an ASR recycling process for recycling plastic fragments contained in an ASR plastic mix, wherein the system comprises:
a measurement device configured for performing a Raman spectroscopy, a MIR spectroscopy, a LlF spectroscopy and/or a Terahertz spectroscopy, and measuring a Raman spectrum, a MIR spectrum, a LlF spectrum and/or a Terahertz spectrum, of at least a part of the plastic fragments for generating and providing measurement data indicative of the measurement, and
an apparatus according to any of the preceding claims.

10. An apparatus for training a machine learning classification model utilizable in the apparatus according to any of claims 1 to 8, wherein the apparatus comprises:
a historical data providing unit for providing historical data for training the classification model, wherein the historical data comprises a) measurement data of a plurality of plastic fragments of different types and with different additives, and b) a respective classification for each of the plurality of plastic fragments, wherein the measurement is indicative of a Raman spectrum received from the plastic fragments when subjected to Raman spectroscopy, a MIR spectrum received from the plastic fragments when subjected to MIR spectroscopy, a LlF spectrum received from the plastic fragments when subjected to LlF spectroscopy, and/or a Terahertz spectrum received from the plastic fragments when subjected to Terahertz spectroscopy,
a model providing unit for providing a trainable machine learning based classification model,
a training unit for training the trainable classification model based on the historical data such that the trained classification model is configured to determine a class of a plastic fragment based on the respective measurement data of the plastic fragment, and
a trained model providing unit for providing the trained classification model.

11. A computer-implemented method for generating control data for controlling at least a part of an automotive shredder residue (ASR) recycling process for recycling plastic fragments contained in an ASR plastic mix, wherein the plastic fragments are provided to a recycling process, wherein the provided plastic fragments optionally comprise a polyurethane foam product, a polyurethane foam product with styrene-acrylonitrile (SAN) particles, a polyurethane foam product comprising different polyurethane foam types, a polyolefin product, an acrylonitrile-butadiene-styrene product, a polyamide product, a polyoxymethylene product, a polyethylene terephthalate product, a polybutylene terephthalate product, a halogen-containing polymer product, or a product comprising any mixture thereof, wherein the method comprises:
providing measurement data associated with at least a part of the plastic fragments, wherein the measurement data is indicative of a Raman spectrum received from the part of the plastic fragments when subjected to Raman spectroscopy, a MIR spectrum received from the part of the plastic fragments when subjected to MIR spectroscopy, a LlF spectrum received from the part of the plastic fragments when subjected to LlF spectroscopy, and/or a Terahertz spectrum received from the part of the plastic fragments when subjected to Terahertz spectroscopy,
providing a plastic classification model for classifying the at least a part of the plastic fragments into a class of one or more plastic classes, wherein the plastic classes depend on the plastic fragment types and/or further additives in the plastic fragments, and wherein the classification model is a machine learning based model trained utilizing historical data to classify plastic fragments into a class of the one or more classes based on the measurement data,
classifying the at least a part of the plastic fragments based on the classification model and the measurement data,
generating control data for controlling at least a part of the ASR recycling process based on the classification of the part of the plastic fragments.

12. A computer-implemented method for training a machine learning classification model utilizable in the apparatus according to any of claims 1 to 8, wherein the method comprises:
providing historical data for training the classification model, wherein the historical data comprises a) measurement data of a plurality of plastic fragments of different types and with different additives, and b) a respective classification for each of the plurality of plastic fragments, wherein the measurement data is indicative of a Raman spectrum received from the plastic fragments when subjected to Raman spectroscopy, a MIR spectrum received from the plastic fragments when subjected to MIR spectroscopy, a LlF spectrum received from the plastic fragments when subjected to LlF spectroscopy, and/or a Terahertz spectrum received from plastic fragments when subjected to Terahertz spectroscopy,
providing a trainable machine learning based classification model,
training the trainable classification model based on the historical data such that the trained classification model is configured to determine a class of plastic fragments based on the respective measurement data of the plastic fragments, and
providing the trained classification model.

13. An automotive shredder residue (ASR) recycling process for recycling plastic fragments contained in an ASR plastic mix, wherein the ASR recycling process is controlled utilizing control data generated by the apparatus according to any of claims 1 to 8 and/or the method according to claim 11.

14. A computer program product for generating control data for controlling at least a part of an automotive shredder residue (ASR) recycling process for recycling plastic fragments contained in an ASR plastic mix, wherein the computer program product comprises program code means for causing an apparatus according to any of claims 1 to 9 to carry out the method according to claim 11.

15. A computer program product for generating control data for training a machine learning classification model utilizable in the apparatus according to any of claims 1 to 9, wherein the computer program product comprises program code means for causing an apparatus according to claim 10 to carry out the method according to claim 12.
